# EUROPEAN PATENT SPECIFICATION

(11) **EP 1 632 784 B1**
(45) Date of publication and mention of the grant of the patent: **11.07.2007**
(21) Application number: 05018889.5
(22) Date of filing: 31.08.2005
(51) Int. Cl.: G01S 1/00

(54) **Positioning system, terminal apparatus, control program for terminal apparatus, and computer readable recording medium**
Navigationssystem, Endgerät, Steuerprogramm für Endgerät, computerlesbares Speichermedium
Système de positionnement, dispositif terminal, logiciel de commande pour le dispositif terminal, et support d'enregistrement lisible sur ordinateur

(30) Priority: 02.09.2004 JP 2004255281
(43) Date of publication of application: 08.03.2006
(73) Proprietor: SEIKO EPSON CORPORATION, Shinjuku-ku Tokyo 163-0811 (JP)
(72) Inventor: Kimura, Akira, Suwa-shi Nagano-ken 392-8502 (JP)
(74) Representative: HOFFMANN EITLE

(56) References cited:
- US-A- 5 917 444
- US-A1- 2003 030 584
- US-A1- 2003 069 694
- US-A1- 2004 063 411

## Description

### BACKGROUND OF THE INVENTION

### 1. Technical Field

The present invention relates to a positioning system, a terminal apparatus, a control program for the terminal apparatus, and a computer readable recording medium having recorded therein the control program for the terminal apparatus that are based on position related signals from positional information satellites.

### 2. Related Art

A positioning system, which utilizes a satellite navigation system using a positional information satellite, for example, a Global Positioning System (SPS) to determine a position of a SPS receiver, has been put to practical use. In such a positioning system, there is a system in which a SPS receiver acquires, from an assist server on the outside, assist data for receiving a satellite signal from a SPS satellite, uses the assist data to generate information forming a basis of positioning calculation on the basis of the received satellite signal (hereinafter referred to as positioning basis information), transmits the positioning basis information to a positioning server on the outside, and receives a result of positioning performed by the positioning server (hereinafter referred to as a server positioning type) (see, for example, JP-A-2000-131415 (Fig. 1, etc.)).

In such a positioning system of the server positioning type, it is unnecessary to perform the positioning calculation inside the SPS receiver. Thus, there is an advantage that it is easy to design a terminal and it is possible to reduce production cost.

In the SPS receiver, in order to generate a frequency forming a basis for generating a synchronizing frequency, oscillating means, for example, a quartz oscillator is used in the SPS receiver. An oscillation frequency of this quartz oscillator changes because of temperature to cause shift in a reception frequency for receiving a satellite signal (hereinafter referred to as drift).

However, in the positioning system of the server positioning type, there is a problem in that the drift is not fed back and long time is required for receiving a satellite signal from the SPS satellite in some cases.

### SUMMARY

Therefore, an advantage of the invention is to provide a positioning system, a terminal apparatus, a control program for the terminal apparatus, and a computer readable recording medium having recorded therein the control program for the terminal apparatus that can acquire information indicating drift even if the positioning system is a positioning system of the server positioning type.

US 5 917 444 - relating to the preamble of claim 1 - pertains to a method for fast acquisition of signals from a satellite in satellite positioning system that does not require permanent storage of satellite ephemeris information at a ground station. A reference station provides a new station with an estimated reference station location and ephemeris information for one or more identified satellites visible from the reference station. The new station receives and uses this information to establish carrier frequency ranges to search for the identified satellite, by limiting the search to a reduced frequency range based upon estimated Doppler shift of signals of the satellite positioning system received from the satellite.

US 2004/0063411 teaches a frequency management scheme for a hybrid cellular/GPS or other device that generates a local clock signal for the communications portion of the device, using a crystal oscillator or other part. The oscillator output may be corrected by way of an automatic frequency control (AFC) circuit or software, to drive the frequency of that clock signal to a higher accuracy. Besides being delivered to the cellular or other communications portion of the hybrid device, the compensated clock signal may also be delivered to a comparator to measure the offset between the cellular oscillator and the GPS oscillator. The error in the cellular oscillator may be measured from the AFC operation in the cellular portion of the device. An undershoot or overshoot in the delta between the two oscillators may thus be deduced to be due to bias in the GPS oscillator, whose value may then be determined. That value may then be used to adjust Doppler search, bandwidth or other GPS receiver characteristics to achieve better time to first fix or other performance characteristics.

According to a first aspect of invention, there is provided a positioning system including: a terminal apparatus that acquires positioning positional information from a positioning apparatus that performs positioning calculation based on position related signals from plural positional information satellites; and a supplementary information providing apparatus that is capable of communicating with the terminal apparatus and provides the terminal apparatus with supplementary information for receiving the position related signals. In the positioning system, the supplementary information includes Doppler frequency information indicating a Doppler frequency that is a change in a frequency of the position related signals due to relative movement of the respective positional information satellites and the terminal apparatus. The terminal apparatus includes: a supplementary information acquiring unit that acquires the supplementary information from the supplementary information providing apparatus; a signal receiving unit that receives the position related signals from the positional information satellites on the basis of the supplementary information; a reception frequency information generating unit that generates reception frequency information indicating a reception frequency at the time when the position related signals are received; a frequency difference information generating unit that generates frequency difference information indicating a frequency difference between a transmission frequency, which is a frequency at the time when the respective positional information satellites transmit the position related signals, and the reception frequency; a drift frequency information generating unit that generates drift frequency information indicating a drift frequency, which is shift of the reception frequency due to a factor inside the terminal apparatus, on the basis of the Doppler frequency information included in the supplementary information and the frequency difference information generated by the terminal apparatus; a positioning-requiring-number-of-position-related-signals receiving unit that receives the position related signals as many as a number required for positioning calculation by the positioning apparatus on the basis of the transmission frequency information indicating the transmission frequency of the position related signals from the respective positional information satellites, the Doppler frequency information corresponding to the respective positional information satellites, and the drift frequency information; a positioning basis information generating unit that generates positioning basis information to be used by the positioning apparatus for the positioning calculation on the basis of the received respective position related signals; and a positioning basis information transmitting unit that transmits the positioning basis information to the positioning apparatus.

In order to receive the position related signals from the positional information satellites, the terminal apparatus is required to synchronize with the position related signals taking into account not only a frequency at the time when the position related signals are transmitted from the respective positional information satellites (hereinafter referred to as transmission frequency) but also a change in a frequency due to the Doppler effect (hereinafter referred to as Doppler frequency) caused by relative positional movement of the respective positional information satellites and the terminal apparatus and a change in a frequency due to a factor inside the terminal apparatus.

The change in a frequency due to a factor inside the terminal apparatus is, for example, shift of a frequency for receiving the position related signals (the drift described above) that is caused by a change in an oscillation frequency due to temperature of the quartz oscillator for generating a frequency forming a basis of a synchronizing frequency of the terminal apparatus.

The supplementary information providing apparatus can calculate the Doppler frequency on the basis of a general position of the terminal apparatus and orbit information of the respective positional information satellites and provide the terminal apparatus with the Doppler frequency.

On the other hand, since the drift varies depending on the terminal apparatus, the supplementary information providing apparatus, which is an external apparatus, cannot calculate the drift.

Therefore, in order to synchronize with the position related signals, the terminal apparatus itself needs to generate information indicating the drift. This is because, if there is no information indicating the drift, since the terminal apparatus searches for the position related signals on the basis of only the transmission frequency and the Doppler frequency, long time may be required for reception of the position related signals.

In this respect, according to the first aspect of the invention, the terminal apparatus can generate frequency difference information indicating a frequency difference between the transmission frequency and the reception frequency with the frequency difference information generating unit.

This frequency difference information is information including both the Doppler frequency and the drift. Therefore, it is possible to calculate the drift if the Doppler frequency is excluded from a frequency indicated by the frequency difference information. In other words, the terminal apparatus can generate drift frequency information, which indicates a drift frequency that is shift of the reception frequency due to a factor inside the terminal apparatus, with the drift frequency information generating unit on the basis of the Doppler frequency information included in the supplementary information and the frequency difference information generated by the terminal apparatus.

Besides, since positioning calculation is not performed in order to generate the drift frequency information, it is possible to generate the drift frequency information promptly compared with the case in which positioning calculation is performed.

Consequently, it is possible to provide a positioning system that can acquire information indicating drift even if the positioning system is a positioning system of the server positioning type.

Moreover, the terminal apparatus can receive the position related signals as many as a number necessary for positioning calculation by the positioning apparatus with the positioning-requiring-number-of-position-related-signals receiving unit on the basis of the transmission frequency information indicating the transmission frequency, the Doppler frequency information corresponding to the respective positional information satellites, and the drift frequency information.

Consequently, after generating the drift frequency information, it is possible to receive the position related signals as many as a number required for positioning calculation by the positioning apparatus.

According to a second aspect of the invention, the above mentioned advantage is achieved by a terminal apparatus that acquires positioning positional information from a positioning apparatus that performs positioning calculation based on position related signals from plural positional information satellites. The terminal apparatus includes: a supplementary information acquiring unit that acquires supplementary information, which includes Doppler frequency information indicating a Doppler frequency that is a change in a frequency of the position related signals due to relative movement of the respective positional information satellites and the terminal apparatus, from a supplementary information providing apparatus capable of communicating with the terminal apparatus; a signal receiving unit that receives the position related signals from the positional information satellites on the basis of the supplementary information; a reception frequency information generating unit that generates reception frequency information indicating a reception frequency at the time when the position related signals are received; a frequency difference information generating unit that generates frequency difference information indicating a frequency difference between a transmission frequency, which is a frequency at the time when the respective positional information satellites transmit the position related signals, and the reception frequency; a drift frequency information generating unit that generates drift frequency information indicating a drift frequency, which is shift of the reception frequency due to a factor inside the terminal apparatus, on the basis of the Doppler frequency information included in the supplementary information and the frequency difference information generated by the terminal apparatus; a positioning-requiring-number-of-position-related-signals receiving unit that receives the position related signals.as many as a number required for positioning calculation by the positioning apparatus on the basis of the transmission frequency information indicating the transmission frequency of the position related signals from the respective positional information satellites, the Doppler frequency information corresponding to the respective positional information satellites, and the drift frequency information; a positioning basis information generating unit that generates positioning basis information to be used by the positioning apparatus for the positioning calculation on the basis of the received respective position related signals; and a positioning basis information transmitting unit that transmits the positioning basis information to the positioning apparatus.

According to a configuration in the second aspect of the invention, as that in the first aspect of the invention, the terminal apparatus can acquire information indicating drift even if the positioning system is a positioning system of the server positioning type.

In a third aspect of the invention, in the configuration in the second aspect of the invention, the drift frequency information generating unit generates the drift frequency information on the basis of at least one set of the Doppler frequency information and the frequency difference information.

According to the third aspect of the invention, for example, it is possible to generate the drift frequency information promptly by generating the drift frequency information on the basis of one set of the Doppler frequency information and the frequency difference information.

In addition, for example, by generating the drift frequency information on the basis of three sets of the Doppler frequency information and the frequency difference information, it is possible to generate the drift frequency information that is more accurate than that in the case of one set of the Doppler frequency information and the frequency difference information.

In a fourth aspect of the invention, in the configuration in the second or the third aspect of the invention the terminal apparatus includes: a preliminary-positioning-positional-information generating unit that performs preliminary positioning calculation on the basis of the plural position related signals received by the signal receiving unit to generate preliminary positioning positional information indicating a preliminary positioning position; and a preliminary-positioning-positional-information-with-minimum-error selecting unit that selects preliminary positioning positional information with minimum error that is the preliminary positioning positional information with a minimum positioning error from plural pieces of the preliminary positioning positional information generated by the preliminary-positioning-positional-information generating unit. The reception frequency information generating unit generates the reception frequency information indicating a frequency at which the position related signals corresponding to the preliminary positioning positional information with minimum error are received.

When a signal received by the terminal apparatus is a signal from a satellite other than the positional information satellite, when a signal from the positional information satellite reflects on a building to reach the terminal apparatus, and the like (the signals are hereinafter referred to error signals), the terminal apparatus cannot generate the accurate drift frequency information.

In this regard, according to a configuration in the fourth aspect of the invention, the terminal apparatus can generate the preliminary positioning positional information with the preliminary-positioning-positional-information generating unit. Unlike the positioning positional information generated by the positioning apparatus, this preliminary positioning positional information is information that is generated by positioning calculation of a preliminary nature carried out inside the terminal apparatus. Whereas the positioning positional information generated by the positioning apparatus may be generated through a complicated arithmetic operation such as map matching, the preliminary positioning positional information only has to attain an object of excluding the error signal. Thus, the positioning calculation is a provisional positioning calculation based on limited information held by the terminal apparatus. Therefore, the terminal apparatus can generate the preliminary positioning positional information more promptly compared with the case in which a complicated arithmetic operation is performed.

The terminal apparatus can select the preliminary position information with minimum error from the plural pieces of preliminary positioning positional information with the preliminary-positioning-positional-information-with-minimum-error selecting unit. Since the preliminary positioning positional information generated on the basis of the error signal has a large error, the preliminary positioning positional information is excluded by the preliminary-positioning-positional-information-with-minimum-error selecting unit.

Moreover, the reception frequency information generating unit of the terminal apparatus generates the reception frequency information indicating a frequency at which the position related signals corresponding to the preliminary positional information with minimum error are received.

Consequently, the terminal apparatus can exclude an error signal and the like as a prerequisite for generating the drift frequency information. Thus, it is possible to generate the accurate drift frequency information.

In a fifth aspect of the invention, in any configuration of the second to the fourth aspects of the invention the terminal apparatus includes drift information storing unit that stores the drift frequency information, and the signal receiving unit uses the drift frequency information in order to receive the position related signals for acquiring the positioning positional information from the positioning apparatus next time.

According to a configuration of the fifth aspect of the invention, the terminal apparatus can not only use the drift frequency information in order to acquire the positioning positional information once but also use the drift frequency information in acquiring the positioning positional information next time.

In a sixth aspect of the invention, in any configuration of the second to the fifth aspects of the invention the terminal apparatus includes: a drift-frequency-transition-information storing unit that stores drift frequency transition information indicating transition of the drift frequency due to temperature change; a temperature-information-at-drift-information-generation-time generating unit that generates temperature information at the time of drift information generation indicating temperature at the time when the drift frequency information is generated; and a drift-frequency-transition-information correcting unit that corrects the drift frequency transition information on the basis of the drift frequency information and the temperature information at the time of drift information generation.

According to a configuration in the sixth aspect of the invention, the terminal apparatus stores the drift frequency transition information in the drift-frequency-transition-information storing unit. In other words, the terminal apparatus has data of a change in drift of the terminal apparatus due to temperature. The terminal apparatus can receive the position related signal promptly by using the drift frequency transition information.

However, a characteristic of, for example, a quartz oscillator, which generates a frequency forming a basis of a synchronizing frequency of the terminal apparatus, changes with time and the drift frequency transition information stored by the terminal apparatus diverges from an actual state in some cases.

In this respect, since the terminal apparatus has the drift-frequency-transition-information correcting unit, the terminal apparatus can correct the drift frequency transition information on the basis of the drift frequency information and the temperature information at the time of drift information generation.

According to a seventh aspect of the invention, the above mentioned advantage is achieved by a control program for a terminal apparatus that causes a computer to execute: a supplementary information acquiring step in which a terminal apparatus, which acquires positioning positional information from a positioning apparatus that performs positioning calculation based on position related signals from plural positional information satellites, acquires supplementary information, which includes Doppler frequency information indicating a Doppler frequency that is a change in a frequency of the position related signals due to relative movement of the respective positional information satellites and the terminal apparatus, from a supplementary information providing apparatus that is capable of communicating with the terminal apparatus; a signal receiving step in which the terminal apparatus receives the position related signals from the positional information satellites on the basis of the supplementary information; a reception frequency information generating step in which the terminal apparatus generates reception frequency information indicating a reception frequency at the time when the position related signals are received; a frequency difference information generating step in which the terminal apparatus generates frequency difference information indicating a frequency difference between the transmission frequency and the reception frequency; a drift frequency information generating step in which the terminal apparatus generates drift frequency information indicating a drift frequency, which is shift of the reception frequency due to a factor inside the terminal apparatus, on the basis of the Doppler frequency information included in the supplementary information and the frequency difference information generated by the terminal apparatus; a positioning-requiring-number-of-position-related-signals receiving step in which the terminal apparatus receives the position related signals as many as a number required for positioning calculation by the positioning apparatus on the basis of the transmission frequency information indicating the transmission frequency of the position related signals from the respective positional information satellites, the Doppler frequency information corresponding to the respective positional information satellites, and the drift frequency information; a positioning basis information generating step in which the terminal apparatus generates positioning basis information to be used by the positioning apparatus for the positioning calculation on the basis of the received respective position related signals; and a positioning basis information transmitting step in which the terminal apparatus transmits the positioning basis information to the positioning apparatus.

According to an eighth aspect of the invention, the above mentioned advantage is achieved by a computer recording medium having recorded therein a control program for a terminal apparatus, the control program causing a computer to execute: a supplementary information acquiring step in which a terminal apparatus, which acquires positioning positional information from a positioning apparatus that performs positioning calculation based on position related signals from plural positional information satellites, acquires supplementary information, which includes Doppler frequency information indicating a Doppler frequency that is a change in a frequency of the position related signals due to relative movement of the respective positional information satellites and the terminal apparatus, from a supplementary information providing apparatus that is capable of communicating with the terminal apparatus; a signal receiving step in which the terminal apparatus receives the position related signals from the positional information satellites on the basis of the supplementary information; a reception frequency information generating step in which the terminal apparatus generates reception frequency information indicating a reception frequency at the time when the position related signals are received; a frequency difference information generating step in which the terminal apparatus generates frequency difference information indicating a frequency difference between the transmission frequency and the reception frequency; a drift frequency information generating step in which the terminal apparatus generates drift frequency information indicating a drift frequency, which is shift of the reception frequency due to a factor inside the terminal apparatus, on the basis of the Doppler frequency information included in the supplementary information and the frequency difference information generated by the terminal apparatus; a positioning-requiring-number-of-position-related-signals receiving step in which the terminal apparatus receives the position related signals as many as a number required for positioning calculation by the positioning apparatus on the basis of the transmission frequency information indicating the transmission frequency of the position related signals from the respective positional information satellites, the Doppler frequency information corresponding to the respective positional information satellites, and the drift frequency information; a positioning basis information generating step in which the terminal apparatus generates positioning basis information to be used by the positioning apparatus for the positioning calculation on the basis of the received respective position related signals; and a positioning basis information transmitting step in which the terminal apparatus transmits the positioning basis information to the positioning apparatus.

### BRIEF DESCRIPTION OF THE DRAWINGS

The invention will be described with reference to the accompanying drawings, wherein like numbers reference like elements, and wherein:
- Fig. 1: is a schematic diagram showing a positioning system that is an embodiment of the invention;
- Fig. 2: is a schematic diagram showing a main hardware configuration of an assist server;
- Fig. 3: is a schematic diagram showing a main hardware configuration of a terminal;
- Fig. 4: is a schematic diagram showing a main software configuration of the assist server;
- Fig. 5: is a schematic diagram showing a main software configuration of the terminal;
- Fig. 6: is a diagram showing a transmission frequency and the like from a SPS satellite;
- Figs. 7A and 7B: are diagrams showing an example of transmission/reception frequency difference information and the like;
- Fig. 8: is a diagram showing an example of positioning basis information;
- Fig. 9: is a schematic flowchart showing an example of an operation of the positioning system;
- Fig. 10: is a schematic diagram showing a main software configuration of a terminal;
- Fig. 11: is a graph showing an example of drift transition estimation model information;
- Fig. 12: is a graph showing an example of a drift transition estimation model correction program; and
- Fig. 13: is a schematic flowchart showing an example of an operation of a positioning system.

### DESCRIPTION OF THE EMBODIMENTS

Preferred embodiments of the invention will be hereinafter explained in detail with reference to the accompanying drawings and the like.

Note that, since embodiments to be described below are preferred specific examples of the invention, technically preferable various limitations are attached to the embodiments. However, the scope of the invention is not limited to these modes unless there are descriptions specifically limiting the invention in the following explanation.

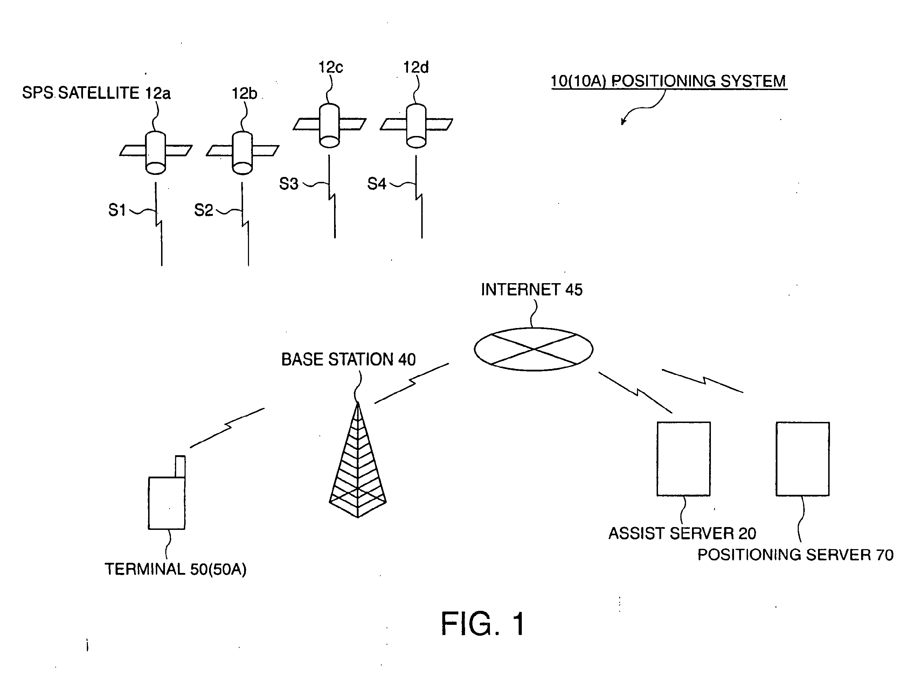

Fig. 1 is a schematic diagram showing a positioning system 10 or the like which is an embodiment of the invention. As shown in Fig. 1, the positioning system 10 includes a positioning apparatus, for example, a positioning server 70 that performs positioning calculation based on position related signals, for example, signals S1, S2, S3, and S4 from plural positional information satellites, for example, SPS satellites 12a, 12b, 12c, and 12d.

The positioning system 10 also includes a terminal apparatus, for example, a terminal apparatus 50 that acquires positioning positional information from the positioning server 70.

The positioning system 10 also includes a supplementary information providing apparatus, for example, an assist server 20 that provides the terminal 50 with supplementary information, for example, assist data described later for receiving the signals S1 and so forth.

The terminal 50 is capable of communicating with the positioning server 70 and the assist server 20 via a communication base station, for example, a base station 40 and a communication network, for example, the Internet 45.

The terminal 50 is, for example, a cellular phone but may be a PHS (Personal Handy-phone System), a PDA (Personal Digital Assistance), or the like.

Note that, unlike this embodiment, the assist server 20 and the positioning server 70 may be formed as a single apparatus.

### (Main hardware configuration of the assist server 20)

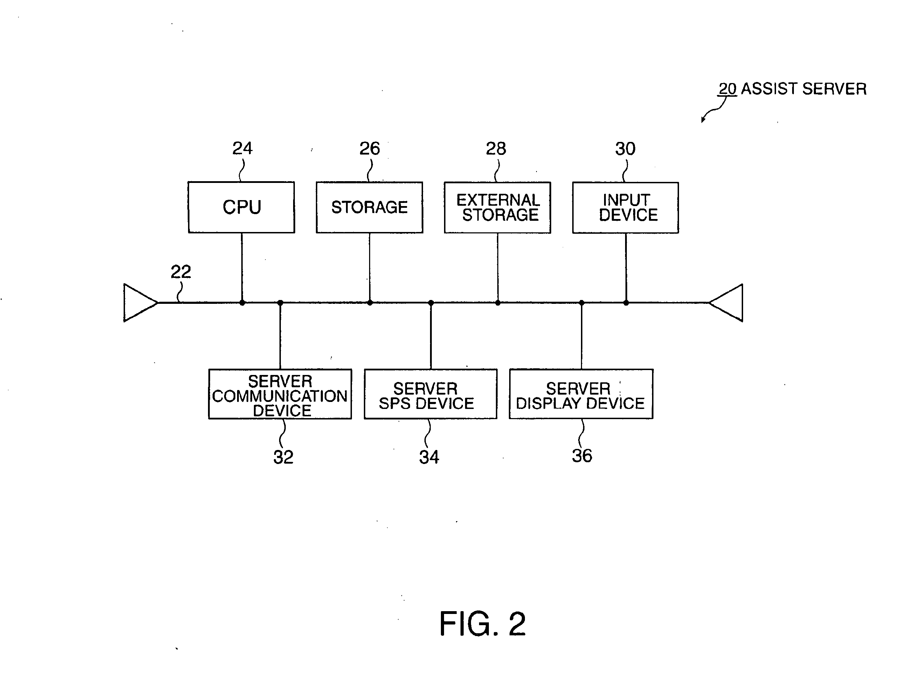

Fig. 2 is a schematic diagram showing a main hardware configuration of the assist server 20. As shown in Fig. 2, the assist server 20 includes, for example, a computer, the computer includes a bus 22, and a Central Processing Unit (CPU) 24, a storage 26, an external storage 28, and the like are connected to the bus 22. The CPU 24 is a control unit that performs processing of a predetermined program and controls the storage 26 and the like connected to the bus 22. The storage 26 is, for example, a Random Access Memory (RAM) or a Read Only Memory (ROM). The external storage 28 is, for example, an Hard Disk (HD).

An input device 30 for inputting various kinds of information and the like and a server communication device 32 for communicating with the terminal 50 and the like are also connected to the bus 22.

A server SPS device 34 is also connected to the bus 22. Consequently, the assist server 20 is capable of receiving the signals S1 and so forth from the SPS satellites 12a and so forth (see Fig. 1) and acquiring satellite information including orbit information and the like of the SPS satellites 12a and so forth.

A server display device 36 for displaying the various kinds of information is also connected to the bus 22.

### (Main hardware configuration of the terminal 50)

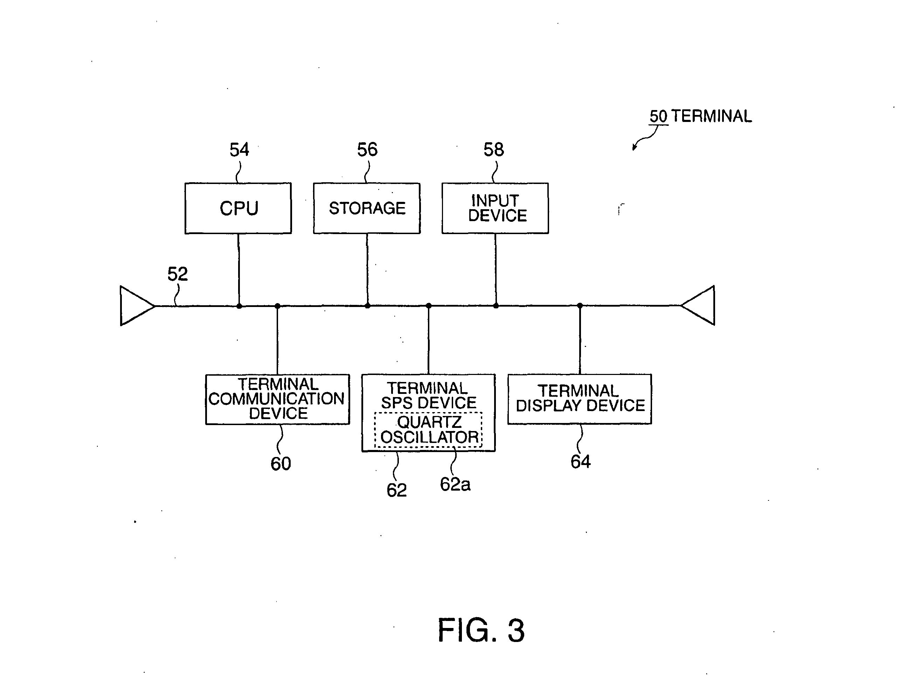

Fig. 3 is a schematic diagram showing a main hardware configuration of the terminal 50. As shown in Fig. 3, the main hardware configuration of the terminal 50 is substantially the same as the main hardware configuration of the assist server 20. However, the terminal 50 does not include an external storage.

A terminal SPS device 62 is an example of a signal receiving unit that receives the signals S1 and so forth from the SPS satellites 12a and so forth (see Fig. 1) on the basis of assist data described later that is acquired from the assist server 20.

As shown in Fig. 3, the terminal SPS device 62 includes a quartz oscillator 62a. The quartz oscillator 62a is a device for generating a signal forming a basis of a synchronizing signal that is necessary for the terminal SPS device 62 to acquire the signals S1 and so forth from the SPS satellites 12a and so forth. An oscillation frequency of the quartz oscillator 62a changes according to temperature. A change in a reception frequency of the signals S1 and so forth caused by a change in the oscillation frequency of the quartz oscillator 62a due to temperature is referred to as drift.

### (Main software configuration of the assist server 20)

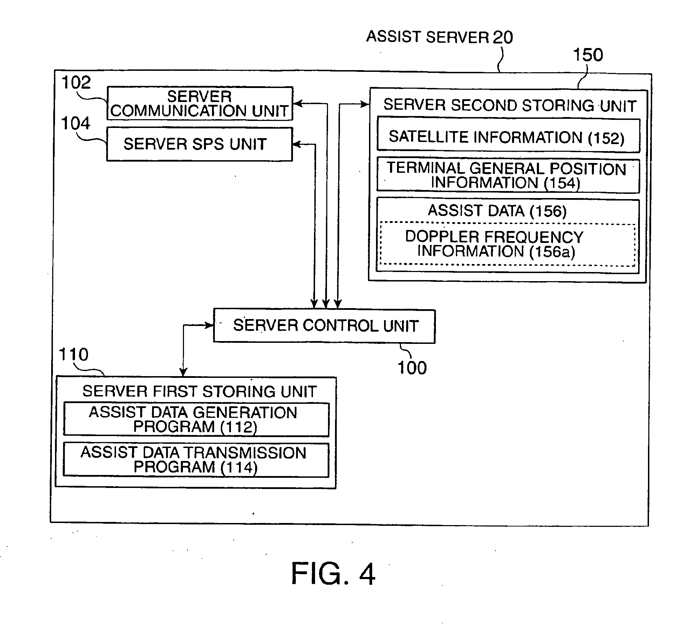

Fig. 4 is a schematic diagram showing a main software configuration of the assist server 20. As shown in Fig. 4, the assist server 20 includes a server control unit 100 that controls respective units, a server communication unit 102 corresponding to the server communication device 32 (see Fig. 2), a server SPS unit 104 corresponding to the server SPS device 34 (see Fig. 2), and the like.

As shown in Fig. 4, the assist server 20 also includes a server first storing unit 110 that stores various programs and a server second storing unit 150 that stores various kinds of information.

The assist server 20 stores assist data generation program 112 in the server first storing unit 110. The assist data generation program 112 is information for allowing the server control unit 100 to generate assist data 156 on the basis of a request from the terminal 50. The assist data 156 is an example of supplementary information.

Specifically, the server control unit 100 generates the assist data 156 according to the assist data generation program 112 on the basis of satellite information 152, which is acquired and stored in the server second storing unit in advance, and terminal general position information 154 indicating a general position of the terminal 50. The satellite information 152 is information including orbit information and the like of the SPS satellites 12a and so forth (see Fig. 1). The terminal general position information 154 is information indicating a position of a base station 40 (see Fig. 1) to which the terminal is in connection.

The server control unit 100 stores the generated assist data 156 in the server second storing unit 150.

The assist data 156 is, for example, information including identification codes of the SPS satellites 12a and so forth, which the terminal 50 can observe, and elevation angles of the respective SPS satellites 12a and so forth. In addition, as shown in Fig. 4, Doppler frequency information 156a is included in the assist data 156. The Doppler frequency information 156a is information indicating a Doppler frequency that is a change in a frequency of the signals S1 and so forth due to a relative movement of the respective SPS satellites 12a and so forth and the terminal 50. In other words, the Doppler frequency information 156a is an example of Doppler frequency information.

The server control unit 100 can calculate a Doppler frequency of each of the SPS satellites 12a and so forth included in the satellite information 152 on the basis of orbit information of the respective SPS satellite 12a included in the satellite information 152 and a general position of the terminal 50 indicated by the terminal general position information 154 and calculate Doppler frequency information 156a.

As shown in Fig. 4, the assist server 20 stores an assist data transmission program 114 in the server first storing unit 110. The assist data transmission program 114 is information for allowing the server control unit 100 to transmit the assist data 156 to the terminal 50.

### (Main software configuration of the terminal 50)

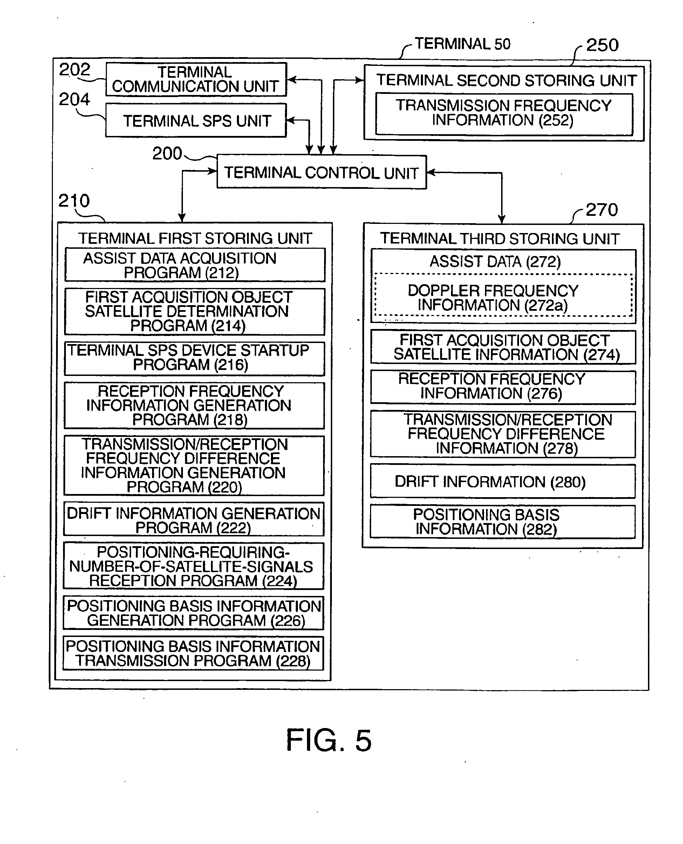

Fig. 5 is a schematic diagram showing a main software configuration of the terminal 50. As shown in Fig. 5, the terminal 50 includes a terminal control unit 200 that controls respective units, a terminal communication unit 202 corresponding to the terminal communication device 60 (see Fig. 3), and a terminal SPS unit 204 corresponding to the terminal SPS device 62 (see Fig. 3) and the like.

As shown in Fig. 5, the terminal 50 also includes a terminal first storing unit 210 that stores various programs, a terminal second unit 250 that stores various kinds of information in advance, and a terminal third storing unit 270 that stores information acquired or generated by the terminal 50.

The terminal 50 stores assist data acquisition program 212 in the terminal first storing unit 210. The assist data acquisition program 212 is information for allowing the terminal control unit 200 to request assist data from the assist server 20 and acquires the assist data 156 (see Fig. 4). In other words, the assist data acquisition program 212 and the terminal control unit 200 are examples of the supplementary information acquiring unit.

The terminal control unit 200 stores the assist data 156 acquired from the assist server 20 in the terminal third storing unit 270 as assist data 272.
The assist data 272 include Doppler frequency information 272a.

As shown in Fig. 5, the terminal 50 stores a first acquisition object satellite determination program 214 in the terminal first control unit 210. The first acquisition object satellite determination program 214 is information for allowing the terminal control unit 200 to determine a SPS satellite to be acquired first among the SPS satellites 12a and so forth (see Fig. 1).

The terminal control 200 determines, for example, the SPS satellite 12a with a largest elevation angle indicated in the assist data 272 as a first acquisition object satellite on the basis of the first acquisition object satellite determination program 214, generates a first acquisition object satellite information 274 indicating the SPS satellite 12a, and stores the first acquisition object satellite information 274 in the terminal third storing unit 270.

As shown in Fig. 5, the terminal 50 stores a terminal SPS device start-up program 216 in the terminal first storing unit 210. The terminal SPS device start-up program 216 is information for allowing the terminal control unit 200 to start the terminal SPS device 62 (see Fig. 3).

As described above, the terminal SPS device 62 is a device for receiving the signals S1 and so forth from the SPS satellites 12a and so forth.

A signal frequency and the like, at which the terminal SPS device 62 receives the signals S1 and so forth, will be explained.

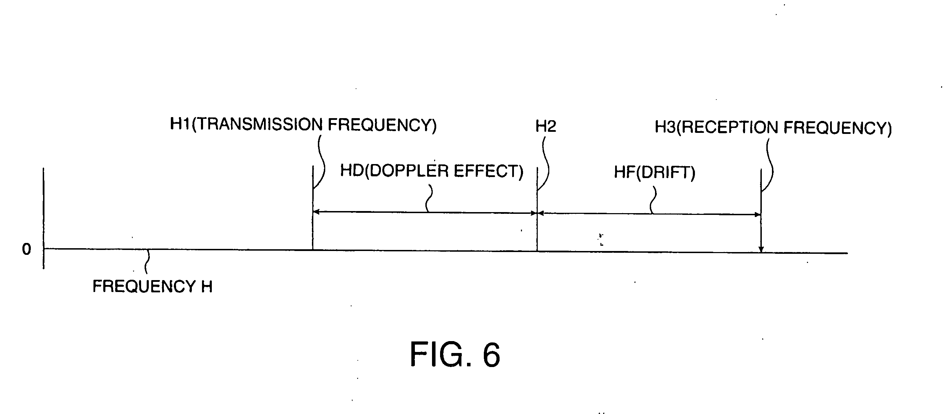

Fig. 6 is a diagram showing a transmission frequency and the like from the SPS satellite 12a. As shown in Fig. 6, for example, if the signal S1 is transmitted at a transmission frequency H1 from the SPS satellite 12a, first, the frequency H1 is displaced to H2 by the Doppler effect HD. A frequency of the signal S1 recognized by the terminal 50 is displaced to H3 by drift HF due to a change in an oscillation frequency of the quartz oscillator 62a (see Fig. 3) included in the terminal SPS device 62. This drift HF is shift of a reception frequency of the signals S1 and so forth due to a factor inside the terminal 50 and is an example of a drift frequency. Consequently, for the terminal 50, a signal with the frequency H3 is the signal S1.

Therefore, even if the terminal 50 acquires the assist data 272 including Doppler frequency information 272a indicating the Doppler effect HD from the assist server 20 and has information indicating the transmission frequency H1, when the terminal does not have information indicating the drift HF, the terminal 50 has to search for the signal S1 around the frequency H2. Thus, reception of the signal S1 may take long time.

In this regard, as explained below, the terminal 50 can acquire information indicating the drift HF without performing positioning. Thus, the terminal 50 can search for the signal S1 around the frequency H3 and receive the signal S1 promptly.

Note that the terminal 50 extracts transmission frequency information 252, which indicates the transmission frequency H1 and the like of the signals S1 and so forth from the SPS satellites 12a and so forth, for example, from the assist data when the transmission frequency information 252 is included in the assist data 272. The terminal 50 stores the transmission frequency information 252 in the terminal second storing unit 250.

As shown in Fig. 5, the terminal 50 stores a reception frequency information generation program 218 in the terminal first storing unit 210. The reception frequency information generation program 218 is information for allowing the terminal control unit 200 to generate reception frequency information 276 indicating a reception frequency at the time when the signals S1 and so forth are received. In other words, the reception frequency information generation program 218 and the terminal control unit 200 are examples of the reception frequency information generating unit.

The reception frequency information 276 is, for example, information indicating the frequency H3 (see Fig. 6) at which the signal S1 is received.

As shown in Fig. 5, the terminal 50 stores the transmission/reception frequency difference information generation program 220 in the terminal first storing unit 210. The transmission/reception frequency difference information generation program 220 is information for allowing the terminal control unit 220 to generate, for example, a transmission/reception frequency difference information 278 indicating a frequency difference between the transmission frequency H1 (see Fig. 6) at the time when the SPS satellite 12a transmits the signal S1 and the reception frequency H3 (see Fig. 6) received by the terminal 50. This transmission/reception frequency difference information 278 is an example of the frequency difference information. The transmission/reception frequency difference information generation program 220 and the terminal control unit 200 are examples of the frequency difference information generating unit.

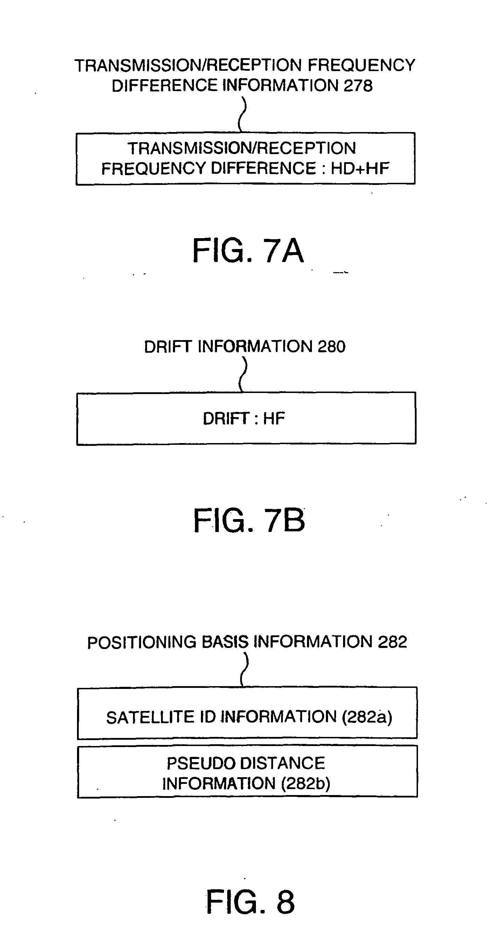

Figs. 7A and 7B are diagrams showing examples of the transmission/reception frequency difference information 278 and a drift information 280.

The terminal control unit 200 generates, for example, the transmission/reception frequency difference information 278 (see Fig. 7A) indicating a frequency difference between the transmission frequency H1 and the reception frequency H3 on the basis of the transmission/reception frequency difference information generation program 220.

The terminal control unit 200 stores the generated transmission/reception frequency difference information 278 in the terminal third storing unit 270.

As shown in Fig. 5, the terminal 50 stores a drift information generation program 222 in the terminal first storing unit 210. The drift information generation program 222 is information for allowing the terminal control unit 200 to generate drift information 280 indicating a drift frequency on the basis of the Doppler frequency information 272a and the transmission/reception frequency difference information 278. This drift information 280 is an example of drift frequency information. The drift information generation program 222 and the terminal control unit 200 are examples of the drift frequency information generating unit.

As shown in Fig. 7A, the transmission/reception frequency difference information 278 includes the Doppler effect HD and the drift HF (see Fig. 6). Therefore, it is possible to generate the drift information 280 indicating the drift HF if the Doppler effect HD indicated by the Doppler frequency information 272a is excluded.

Besides, since positioning calculation is not performed to generate the drift information 280, it is possible to generate the drift information 280 promptly compared with the case in which positioning calculation is performed.

The terminal control unit 200 generates the drift information 280 according to the drift information generation program 222 on the basis of at least one set of Doppler frequency information 272a and the transmission/reception frequency difference information 278.

Consequently, for example, it is possible to generate the drift information 280 promptly by generating the drift information 280 on the basis of the one set of the Doppler frequency information 272a and the transmission/reception frequency difference information 278 corresponding to the SPS satellite 12a.

For example, it is possible to generate the drift information 280 more accurate than that in the case of one set of the Doppler frequency information 272a and the transmission/reception frequency difference information 278 by generating the drift information 280 on the basis of three sets of the Doppler frequency information 272a and the transmission/reception frequency difference information 278. Specifically, for example, it is possible to improve accuracy of the drift information 280 by adopting an average value of the three pieces of drift information 280 that are generated on the basis of the three pieces of the Doppler frequency information 272a and the transmission/reception frequency difference information 278.

The terminal control unit 200 stores the drift information 280 generated as described above in the terminal third storing unit 270. In other words, the terminal third storing unit 270 is an example of the drift information storing unit.

As shown in Fig. 5, the terminal 50 stores a positioning-requiring-number-of-satellite-signals reception program 224 in the terminal first storing unit 210. The positioning-requiring-number-of-satellite-signals reception program 224 is information for allowing the terminal control unit 200 to receive the signals S1 and so forth from the SPS satellites 12a and so forth as many as a number required for positioning calculation by the positioning server 70 (see Fig. 1) with the terminal SPS unit 204. The terminal control unit 200 receives the signals S1 and so forth on the basis of the transmission frequency information 252 of the respective SPS satellites 12a or the like stored in the terminal second storing unit 250, the Doppler frequency information 272a corresponding to the respective SPS satellites 12a and so forth, and the drift information 280. In other words, the positioning-requiring-number-of-satellite-signals reception program 224, the terminal control unit 200, and the SPS unit 204 are examples of the positioning-requiring-number-of-position-related-signals receiving unit.

The number of the signals S1 and so forth of the SPS satellites 12a and so forth necessary for positioning calculation by the positioning server 70 is, for example, three in two-dimensional positioning and four in three-dimensional positioning.

As shown in Fig. 5, the terminal 50 stores a positioning basis information generation program 226 in the terminal first storing unit 210. The positioning basis information generation program 226 is information for allowing the terminal control unit 200 to generate a positioning basis information 282, which the positioning server 70 (see Fig. 1) uses for positioning calculation, in response to the received signals S1 and so forth (see Fig. 1). This positioning basis information 282 is an example of the positioning basis information. The positioning basis information generation program 226 and the terminal control unit 200 are examples of the positioning basis information generating unit.

Fig. 8 is a diagram showing an example of the positioning basis information 282. As shown in Fig. 8, the positioning basis information 282 includes, for example, satellite ID information 282a for identifying the SPS satellites 12a and so forth and pseudo distance information 282b indicating a distance between the respective SPS satellites 12a and so forth and the terminal 50.

The terminal control unit 200 stores the generated positioning basis information 282 in the terminal third storing unit 270.

As shown in Fig. 5, the terminal 50 stores the positioning basis information transmission program 228 in the terminal first storing unit 210. The positioning basis information transmission program 228 is information for allowing the terminal control unit 200 to transmit the positioning basis information 282 to the positioning server 70 (see Fig. 1). In other words, the positioning basis information transmission program 228 and the terminal control unit 200 are examples of the positioning basis information transmitting unit.

The terminal 50 can acquire positioning positional information, which the positioning server 70 generates through positioning calculation on the basis of the positioning basis information 282, from the positioning server 70.

As described above, the terminal 50 can generate the transmission/reception frequency difference information 278 without performing positioning.

The terminal 50 can generate the drift information 280 on the basis of the Doppler frequency information 272a and the transmission/reception frequency difference information 278.

Consequently, it is possible to provide the positioning system 10 that can acquire information indicating drift even if the positioning system is a positioning system of the server positioning type.

The terminal 50 can acquire the SPS satellites 12a and so forth as many as a number necessary for positioning calculation by the positioning server 70 on the basis of the transmission frequency information 252, the Doppler frequency information 272a, and the drift information 280

Consequently, after generating the drift information 280, it is possible to receive the signals S1 and so forth from the SPS satellites 12a and so forth as many as a number necessary for positioning calculation by the positioning server 70.

Moreover, as described above, the terminal 50 stores the drift information 280 in the terminal third storing unit 270. The terminal 50 uses the drift information 280 in order to receive the signals S1 and so forth (see Fig. 1) that are used when positioning positional information of the next time is acquired from the positioning server 70 (see Fig. 1).

### (An example of an operation of the positioning system 10 in this embodiment)

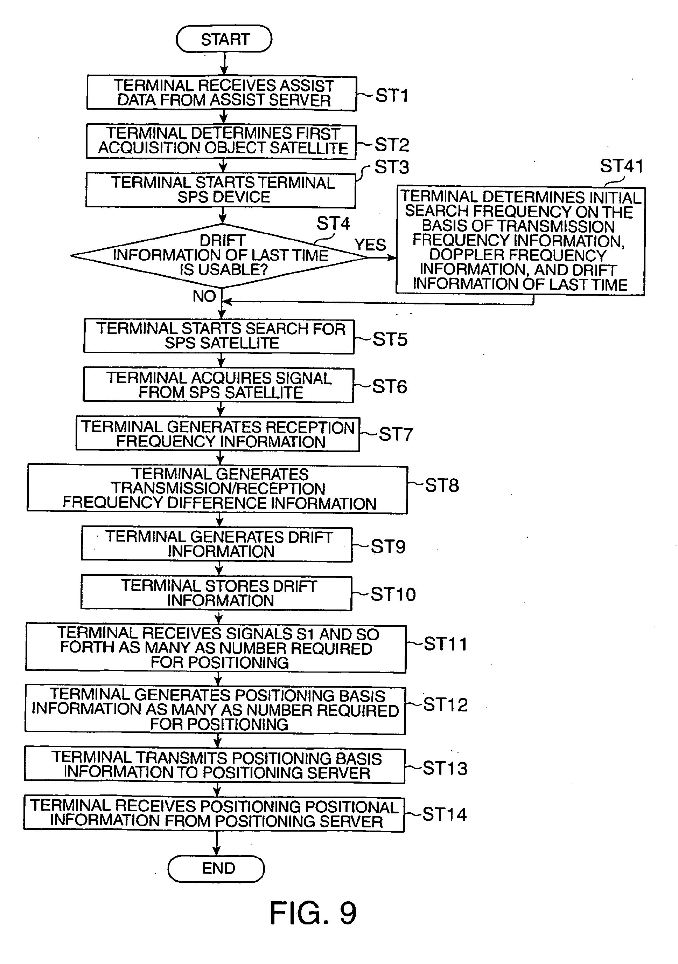

The positioning system 10 is constituted as described above. An example of an operation of the positioning system 10 will be explained. Fig. 9 is a schematic flowchart showing an example of an operation of the positioning system 10.

First, the terminal 50 receives the assist data 156 (see Fig. 4) from the assist server 20 (step ST1). This step ST1 is an example of the supplementary information acquiring step. The terminal 50 stores the received assist data 156 in the terminal third storing unit 270 as assist data 272.

Subsequently, the terminal 50 determines the SPS satellite 12a (see Fig. 1) as a first acquisition object satellite (step ST2) and starts the terminal SPS device 62 (see Fig. 3) (step ST3).

Subsequently, the terminal 50 judges whether the drift information 280 (see Fig. 5) of the last time is usable (step ST4). If it is judges that the drift information 280 of the last time is not usable, the terminal 50 starts search for the SPS satellite 12a on the basis of the transmission frequency information 252 of the SPS satellite 12a and the Doppler frequency information 272a corresponding to the SPS satellite 12a (step ST5) and receives the signal S1 from the SPS satellites 12a (step ST6). This step ST6 is an example of the signal receiving step.

Subsequently, the terminal 50 generates the reception frequency information 276 (see Fig. 5) indicating a frequency at the time when the signal S1 is received (step ST7). This step ST7 is an example of the reception frequency information generating step.

Subsequently, the terminal 50 generates the transmission/reception frequency difference information 278 (see Fig. 7A) indicating a frequency difference between a transmission frequency of the signal S1 and the reception frequency of the signal S1 (step ST8). This step ST8 is an example of the frequency difference information generating step.

Subsequently, the terminal 50 generates the drift information 280 (see Fig. 7B) on the basis of the Doppler frequency information 272a of the signal S1 and the transmission/reception frequency difference information 278 generated in step ST8 (step ST9). This step ST9 is an example of the drift frequency information generating step.

Subsequently, the terminal 50 stores the drift information 280 generated in step ST9 in the terminal third storing unit 270 (step ST10).

Subsequently, the terminal 50 receives the signals S2 and so forth from the SPS satellites 12b and so forth as many as a number necessary for positioning calculation of the positioning server 70 (see Fig. 1) (step ST11). In this case, the terminal 50 receives the signals S2 and so forth on the basis of the transmission frequency information 252 indicating a transmission frequency at which the respective SPS satellite 12b and so forth transmit the signals S2 and so forth, the Doppler frequency information 272a corresponding to the respective SPS satellite 12b and so forth, and the drift information 280 stored in step ST10. In this way, by adding an influence of the drift information 280, it is possible to receive the signals S2 and so forth from the SPS satellites 12b and so forth promptly. This step ST11 is an example of the positioning-requiring-number-of-position-related-signals receiving step.

Subsequently, the terminal 50 generates the positioning basis information 282 (see Fig. 8) as many as a number required for positioning in response to the signals S1 and so forth received in step ST11 (step ST12). This step ST12 is an example of the positioning basis information generating step.

Subsequently, the terminal 50 transmits the positioning basis information 282 generated in step ST12 to the positioning server 70 (see Fig. 1) (step ST13). This step ST13 is an example of the positioning basis information transmitting step.

Subsequently, the terminal 50 receives positioning positional information generated by the positioning server 70 (step ST14). As explained above, the terminal 50 can generate the drift information 280 even if the positioning system is the positioning system 10 of the server measurement type.

### (Second embodiment)

Next, a second embodiment will be explained. Many components of a positioning system 10A (see Fig. 1) in the second embodiment are common to those of the positioning system 10 in the first embodiment. Thus, the common components are denoted by the identical reference numerals and signs and explanations of the common components are omitted. Differences will be hereinafter mainly explained.

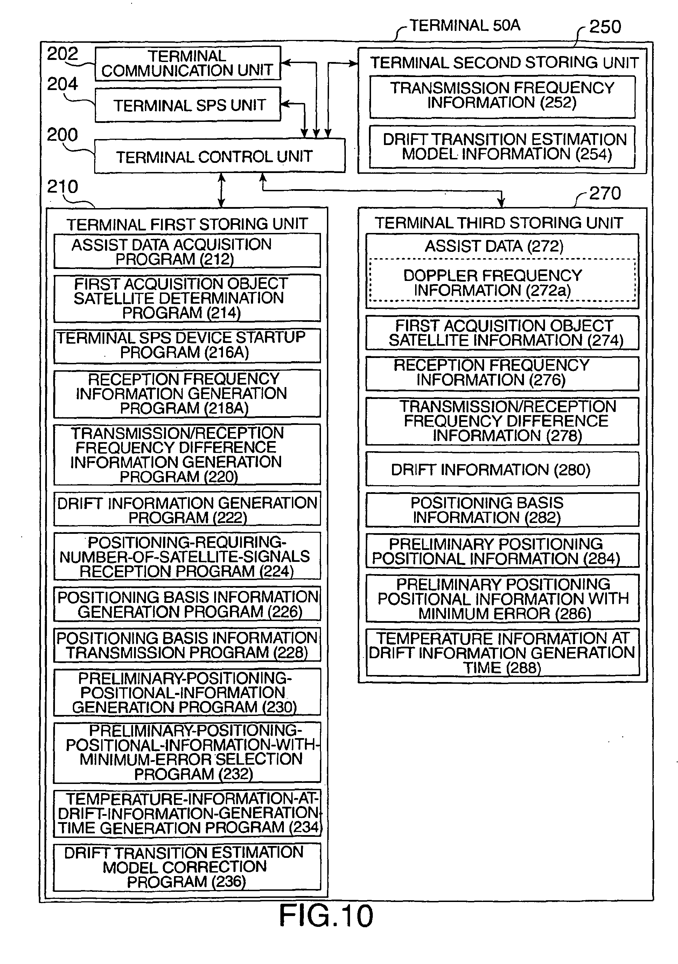

Fig. 10 is a schematic diagram showing a main software configuration of a terminal 50A (see Fig. 1) according to the second embodiment.

As shown in Fig. 10, in the second embodiment, unlike the first embodiment, on the basis of a terminal SPS device start-up program 216A stored in the terminal first storing unit 210, the terminal 50A acquires, for example, the SPS satellite 12a, which is a first acquisition object satellite. At the same time or after the SPS satellite 12a is acquired and before the drift information 280 is generated, the terminal 50A receives the signals S2 and so forth from the SPS satellites 12b and so forth. The terminal 50A receives the signals S1 as many as a number necessary for preliminary positioning calculation described later, for example, the four or more signals S1 and so forth.

As shown in Fig. 10, the terminal 50A stores a preliminary-positioning-positional-information generation program 230 in the terminal first storing unit 210. The preliminary-positioning-positional-information generation program 230 is information for allowing the terminal control unit 200 to perform preliminary positioning calculation and generates preliminary positioning positional information 284 indicating a preliminary positioning position of the terminal 50 on the basis of the received plural signals S1 and so forth. In other words, the preliminary-positioning-positional-information generating program 230 and the terminal control unit 200 are examples of the preliminary-positioning-positional-information generating unit.

Unlike the positioning positional information generated by the positioning server 70 (see Fig. 1), the preliminary positioning positional information 284 is positioning calculation of a preliminary nature that is carried out inside the terminal 50A. Whereas the positioning positional information generated by the positioning server 70 may be generated by, for example, a complicated arithmetic operation such as map matching, the preliminary positioning positional information 284 only has to attain an object of excluding error signals such as signals unrelated to a SPS and reflected waves. Thus, the preliminary positioning positional information 284 is provisional positioning calculation based on limited information held by the terminal 50A. Therefore, the terminal 50A can generate the preliminary positioning positional information 284 more promptly compared with the case in which a complicated arithmetic operation is performed.

The terminal control unit 50A stores the generated preliminary positioning positional information 284 in the terminal third storing unit 270.

As shown in Fig. 10, the terminal 50A stores a preliminary-positioning-positional-information-with-minimum-error selection program 232 in the terminal first storing unit 210. The preliminary-positioning-positional-information-with-minimum-error selection program 232 is information for allowing the terminal control unit 200 to select a preliminary positioning positional information with minimum error 286 having a minimum positioning error from the plural pieces of preliminary positioning positional information 284. In other words, the preliminary-positioning-positional-information-with-minimum-error selection program 232 and the terminal control unit 200 are examples of the preliminary-positioning-positional-information-with-minimum-error selecting unit.

For example, the terminal control unit 200 selects the preliminary positioning positional information 284, which indicates a position closest to a positioning positional information acquired from the positioning server 70 (see Fig. 1) last time, as the preliminary positioning positional information with minimum error 286. The terminal control unit 200 selects the preliminary positioning positional information 284 on the basis of the preliminary-positioning-positional-information-with-minimum-error selection program 232 and stores the preliminary positioning positional information 284 in the terminal third storing unit 270.

The terminal control unit 200 generates the reception frequency information 276, which indicates a frequency at which the signals S1 and so forth corresponding to the preliminary positioning positional information with minimum error 286, on the basis of a reception frequency information generation program 218A stored in the terminal first storing unit 210. The signals S1 and so forth corresponding to the preliminary positioning positional information with minimum error 286 are the basis for calculating a most appropriate preliminary positioning position. Thus, the signals S1 and so forth are not considered to be error signals. Therefore, it is possible to generate the reception frequency information 276 with higher reliability by using the frequency at which the signals S1 and so forth corresponding to the preliminary positioning positional information with minimum error 286 are received.

The transmission/reception frequency information 278 and the drift information 280, which are generated on the basis of the reception frequency information 276 with higher reliability, also have higher reliability.

As shown in Fig. 10, the terminal 50A stores drift transition estimation model information 254 in the terminal second storing unit 250.

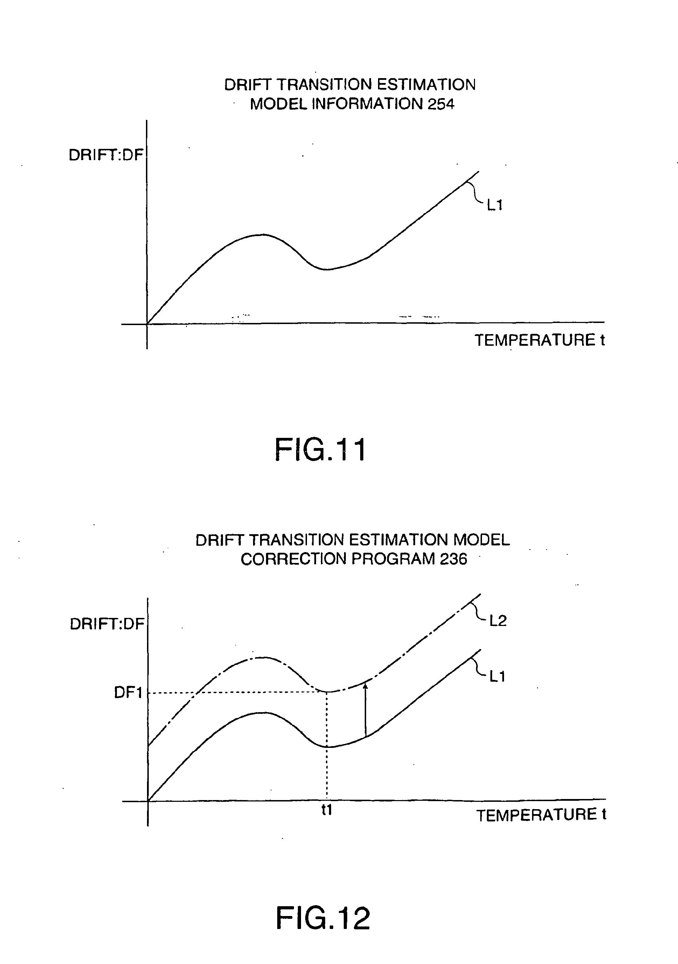

Fig. 11 is a graph showing an example of the drift transition estimation model information 254. As shown in Fig. 11, the drift transition estimation model information 254 is information indicating transition due to a change in temperature t of the drift DF. The drift transition estimation model information 254 is an example of drift frequency transition information and the terminal second storing unit 250 is an example of the drift-frequency-transition-information storing unit.

The terminal 50A can receive the signals S1 and so forth promptly by using the drift transition estimation model information 254.

However, a characteristic of the quartz oscillator 62a (see Fig. 3) changes with time and the drift transition estimation model information 254 stored in the terminal 50A diverges from an actual state in some cases.

In this respect, the terminal 50A can correct the drift transition estimation model information 254 with the constitution described below.

As shown in Fig. 10, the terminal 50A stores a temperature-information-at-drift-information-generation-time generation program 234 in the terminal first storing unit 250. The temperature-information-at-drift-information-generation-time generation program 234 is information for allowing the terminal control unit 200 to generate temperature information at drift information generation time 288 indicating temperature at the time when the drift information 280 is generated. The temperature-information-at-drift-information-generation-time generation program 234 and the terminal control unit 200 are examples of the temperature-information-at-drift-information-generation-time generating unit.

As shown in Fig. 10, the terminal 50A stores a drift transition estimation model correction program 236 in the terminal first storing unit 250. The drift transition estimation model correction program 236 is information for allowing the terminal control unit 200 to correct the drift transition estimation model information 254 on the basis of the drift information 280 and the temperature information at drift information generation time 288.

Fig. 12 is a graph showing an example of the drift transition estimation model correction program 236. As shown in Fig. 12, the drift transition estimation model correction program 236 is set so that, for example, a curve L1 indicating an initial drift transition estimation model is translated on the basis of the drift DF1 indicated by the drift information 280 and temperature t1 indicated by the temperature information at drift information generation time 288 to be corrected to a curve L2.

As explained above, the terminal 50A can correct the drift transition estimation model information 254 and can receive the signals S1 and so forth by using the drift transition estimation model information 254 after the correction.

### (Example of an operation of the positioning system 10A in this embodiment)

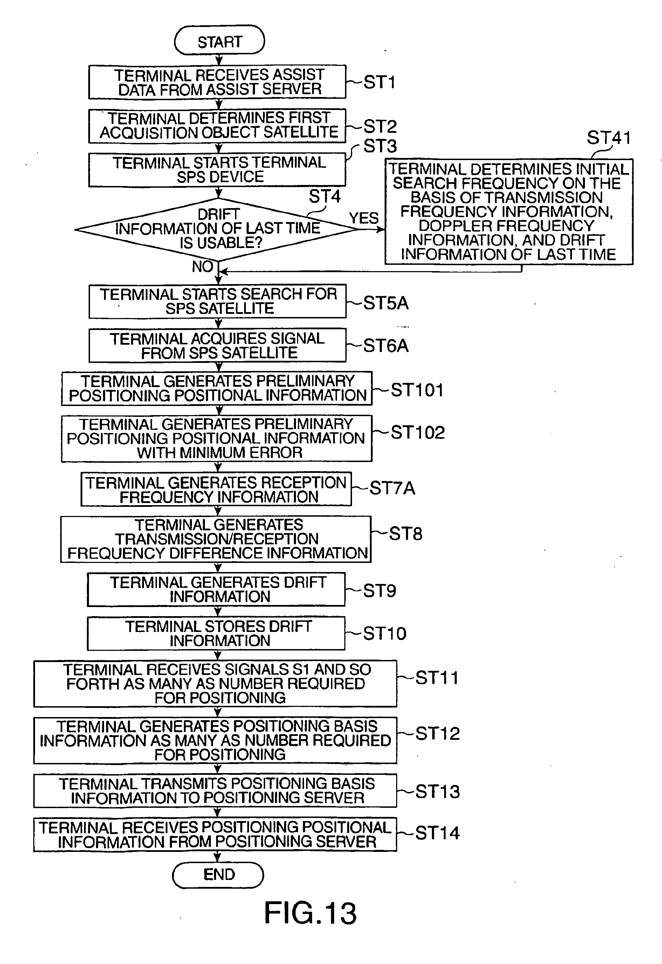

The positioning system 10A is constituted as described above. An example of an operation of the positioning system 10A will be explained. Fig. 13 is a schematic flowchart showing an example of an operation of the positioning system 10A.

Following step ST4 or step 41, for example, after acquiring the SPS satellite 12a that is the first acquisition object satellite and before generating the drift information 280, the terminal 50A searches for the signals S2 and so forth from the SPS satellites 12b and so forth (step ST5A) and receives plural signals including the signal S1 (step ST6A).

Subsequently, the terminal 50A performs preliminary positioning calculation and generates the preliminary positioning positional information 284 indicating a preliminary positioning position of the terminal 50A on the basis of the plural signals S1, etc (step ST101).

Subsequently, the terminal 50A selects the preliminary positioning positional information with minimum error 286 (see Fig. 10) from the plural preliminary positioning positional information 284 generated in step ST101 (step ST102). Consequently, since the preliminary positioning positional information 284, which is generated on the basis of an error signal, has a large error, the preliminary positioning positional information 284 is excluded.

Subsequently, the terminal 50A generates the reception frequency information 276 indicating a frequency at which the signals S1 and so forth corresponding to the preliminary positioning positional information with minimum error 286 are received (step ST7A).

In this way, the terminal 50A can exclude an error signal or the like as a prerequisite for generating the drift information 280, the terminal 50A can generate the accurate drift information 280.

### (A program, a computer readable recording medium and so forth)

It is possible to realize a control program for a terminal apparatus for causing a computer to execute a supplementary information acquiring step, a signal receiving step, a reception frequency information generating step, a frequency difference information generating step, a drift frequency information generating step, a positioning-requiring-number-of-position-related-signals receiving step, a positioning basis information generating step, a positioning basis information transmitting step, and the like in the examples of the operations.

It is also possible to realize a computer readable recording medium having recorded therein such a control program for a terminal apparatus.

It is possible to realize a program storage medium, which is used for installing the control program for a terminal apparatus or the like in a computer and bringing the control program or the like into a state the control program or the like is executable by the computer, not only with a flexible disk such as floppy (registered trademark) and a package medium such as a Compact Disc Read Only Memory (CD-ROM), a compact Disc-Recordable (CD-R), a Compact Disc-Rewritable (CD-RW), or a Digital Versatile Disc (DVD) but also with a semiconductor memory, a magnetic disk, a magneto-optical disk, or the like in which a program is stored temporarily or permanently.

The invention is not limited to the embodiments described above. The embodiments may be combined with one another.

## Claims

1. A positioning system comprising:
a terminal apparatus (50,50A) that acquires positioning positional information from a positioning apparatus (70) that performs positioning calculation based on position related signals from plural positional information satellites (12a-d); and
a supplementary information providing apparatus that is capable of communicating with the terminal apparatus (50,50A) and provides the terminal apparatus (50,50A) with supplementary information for receiving the position related signals, wherein
the supplementary information includes Doppler frequency information (156a,272a) indicating a Doppler frequency that is a change in a frequency of the position related signals due to relative movement of the respective positional information satellites and the terminal apparatus,
the terminal apparatus (50,50A) includes:
a supplementary information acquiring unit that acquires the supplementary information from the supplementary information providing apparatus;
a signal receiving unit that receives the position related signals from the positional information satellites (12a-d) on the basis of the supplementary information;
a reception frequency information (276) generating unit that generates reception frequency information (276) indicating a reception frequency at the time when the position related signals are received;
**characterized in that** the terminal apparatus further includes
a frequency difference information (278) generating unit that generates frequency difference information (278) indicating a frequency difference between a transmission frequency, which is a frequency at the time when the respective positional information satellites (12a-d) transmit the position related signals, and the reception frequency;
a drift frequency information (280) generating unit that generates drift frequency information (280) indicating a drift frequency, which is shift of the reception frequency due to a factor inside the terminal apparatus, on the basis of the Doppler frequency information (156a,272a) included in the supplementary information and the frequency difference information generated by the terminal apparatus (50, 50A);
a positioning-requiring-number-of-position-related-signals receiving unit that receives the position related signals as many as a number required for positioning calculation by the positioning apparatus on the basis of the transmission frequency information (252) indicating the transmission frequency of the position related signals from the respective positional information satellites, the Doppler frequency information (156a, 272a) corresponding to the respective positional information satellites (12a-d), and the drift frequency information (280);
a positioning basis information generating unit that generates positioning basis information to be used by the positioning apparatus for the positioning calculation on the basis of the received respective position related signals; and
a positioning basis information transmitting unit that transmits the positioning basis information to the positioning apparatus.

2. A terminal apparatus (50,50A) that acquires positioning positional information from a positioning apparatus (70) that performs positioning calculation based on position related signals from plural positional information satellites (12a-d), the terminal apparatus (70) comprising:
A supplementary information acquiring unit that acquires supplementary information, which includes Doppler frequency information (152a,272a) indicating a Doppler frequency that is a change in a frequency of the position related signals due to relative movement of the respective positional information satellites (12a-d) and the terminal apparatus (70), from a supplementary information providing apparatus capable of communicating with the terminal apparatus;
A signal receiving unit (ST6) that receives the position related signals from the positional information satellites (12a-d) on the basis of the supplementary information;
A reception frequency information generating unit (ST7) that generates reception frequency information indicating a reception frequency at the time when the position related signals are received;
**characterized in that** the terminal apparatus further comprises
a frequency difference information (278) generating unit that generates frequency difference information indicating a frequency difference between a transmission frequency, which is a frequency at the time when the respective positional information satellites (12a-d) transmit the position related signals, and the reception frequency;
a drift frequency information (280) generating unit (ST9) that generates drift frequency information indicating a drift frequency, which is shift of the reception frequency due to a factor inside the terminal apparatus (50,50A), on the basis of the Doppler frequency information (156a, 272a) included in the supplementary information and the frequency difference information generated by the terminal apparatus;
a positioning-requiring-number-of-position-related-signals receiving unit (ST11) that receives the position related signals as many as a number required for positioning calculation by the positioning apparatus on the basis of the transmission frequency information indicating the transmission frequency of the position related signals from the respective positional information satellites (12a-d), the Doppler frequency information (156a,272a) corresponding to the respective positional information satellites (12a-d), and the drift frequency information (280);
a positioning basis information (282) generating unit (ST12) that generates positioning basis information (282) to be used by the positioning apparatus for the positioning calculation on the basis of the received respective position related signals; and
a positioning basis information transmitting unit (ST13) that a positioning basis information transmitting unit that transmits the positioning basis information to the positioning apparatus.

3. The terminal apparatus (50,50A) according to claim 2, wherein the drift frequency information generating unit generates the drift frequency information on the basis of at least one set of the Doppler frequency information (156a,272a) and the frequency difference information.

4. The terminal apparatus (50, 50A) according to claim 2 or Claim 3, further comprising:
a preliminary-positioning-positional-information generating unit that performs preliminary positioning calculation on the basis of the plural position related signals received by the signal receiving unit to generate preliminary positioning positional information indicating a preliminary positioning position; and
a preliminary-positioning-positional-information-with-minimum-error selecting unit that selects preliminary positioning positional information with minimum error that is the preliminary positioning positional information with a minimum positioning error from plural pieces of the preliminary positioning positional information generated by the preliminary-positioning-positional-information generating unit, wherein
the reception frequency information (276) generating unit generates the reception frequency information (276) indicating a frequency at which the position related signals corresponding to the preliminary positioning positional information with minimum error are received.

5. The terminal apparatus (50,50A) according to claim 2, further comprising drift information storing unit that stores the drift frequency information, wherein
the signal receiving unit uses the drift frequency information in order to receive the position related information for acquiring the positioning positional information from the positioning apparatus next time.

6. The terminal apparatus (50,50A) according to claim 2, further comprising:
a drift-frequency-transition-information storing unit (ST10) that stores drift frequency transition information indicating transition of the drift frequency due to temperature change;
a temperature-information-at-drift-information-generation-time generating unit that generates temperature information at the time of drift information generation indicating temperature at the time when the drift frequency information is generated; and
a drift-frequency-transition-information correcting unit that corrects the drift frequency transition information on the basis of the drift frequency information and the temperature information at the time of drift information generation.

7. A control program for a terminal apparatus (50,50A), the control program causing a computer to execute:
a supplementary information acquiring step in which a terminal apparatus (50 50A), which acquires positioning positional information from a positioning apparatus (70) that performs positioning calculation based on position related signals from plural positional information satellites (12a-d), acquires supplementary information which includes Doppler frequency information (156a,272a) indicating a Doppler frequency that is a change in a frequency of the position related signals due to relative movement of the respective positional information satellites (12a - d) and the terminal apparatus (50,50A), from a supplementary information providing apparatus that is capable of communicating with the terminal apparatus (50, 50A);
a signal receiving step in which the terminal apparatus receives the position related signals from the positional information satellites (12a-d) on the basis of the supplementary information;
a reception frequency information (276) generating step in which the terminal apparatus generates reception frequency information (276) indicating a reception frequency at the time when the position related signals are received;
a frequency difference information (278) generating step in which the terminal apparatus generates frequency difference information (278) indicating a frequency difference between the transmission frequency and the reception frequency;
a drift frequency information (280) generating step in which the terminal apparatus (50,50A) generates drift frequency information (280) indicating a drift frequency, which is shift of the reception frequency due to a factor inside the terminal apparatus, on the basis of the Doppler frequency information (156a,272a) included in the supplementary information and the frequency difference information generated by the terminal apparatus (50,50A);
a positioning-requiring-number-of-position-related-signals receiving step in which the terminal apparatus receives the position related signals as many as a number required for positioning calculation by the positioning apparatus on the basis of the transmission frequency information (252) indicating the transmission frequency of the position related signals from the respective positional information satellites (12a-d), the Doppler frequency information (156a,272a) corresponding to the respective positional information satellites (12a-d), and the drift frequency information;
a positioning basis information generating step in which the terminal apparatus (50,50A) generates positioning basis information to be used by the positioning apparatus for the positioning calculation on the basis of the received respective position related signals; and
a positioning basis information transmitting step in which the terminal apparatus (50, 50A) transmits the positioning basis information to the positioning apparatus.

8. A computer recording medium having recorded therein a control program according to claim 7.

## Patentansprüche

1. Ortungssystem mit:
einem Endgerätapparat (50, 50A), der eine Ortungspositionsinformation von einem Ortungsapparat (70) akquiriert, der eine Ortungsberechung auf der Grundlage positionsbezogener Signale von mehrfachen Positionsinformationssatelliten (12a-d) durchführt, und
einem Zusatzinformations-Bereitstellungsapparat, der fähig ist, mit dem Endgerätapparat (50, 50A) zu kommunizieren, und der dem Endgerätapparat (50, 50A) eine Zusatzinformation zum Empfangen der positionsbezogenen Signale bereitstellt,
wobei die Zusatzinformation eine Dopplerfrequenzinformation (156a, 272a) enthält, die eine Dopplerfrequenz angibt, die eine Änderung in einer Frequenz der positionsbezogenen Signale aufgrund einer Relativbewegung der jeweiligen Positionsinformationssatelliten und des Endgerätapparates ist,
wobei der Endgerätapparat (50, 50A) enthält:
eine Zusatzinformations-Akquisitionseinheit, die die Zusatzinformation von dem Zusatzinformations-Bereitstellungsapparat akquiriert;
eine Signalempfangseinheit, die die positionsbezogenen Signale von den Positionsinformationssatelliten (12a-d) auf der Grundlage der Zusatzinformation empfängt;
eine Empfangsfrequenzinformations-Erzeugungseinheit, die eine Empfangsfrequenzinformation (276) erzeugt, die eine Empfangsfrequenz zu der Zeit angibt, wenn die positionsbezogenen Signale empfangen werden;
**dadurch gekennzeichnet, dass** der Endgerätapparat ferner enthält:
eine Frequenzdifferenzinformations- (278) Erzeugungseinheit, die eine Frequenzdifferenzinformation (278) erzeugt, die eine Frequenzdifferenz zwischen einer Übertragungsfrequenz, die eine Frequenz zu der Zeit ist, wenn die jeweiligen Positionsinformationssatelliten (12a-d) die positionsbezogenen Signale übertragen, und der Empfangsfrequenz angibt;
eine Driftfrequenzinformations- (280) Erzeugungseinheit, die eine Driftfrequenzinformation (280) erzeugt, die eine Driftfrequenz angibt, die eine Verschiebung der Empfangsfrequenz aufgrund eines Faktors innerhalb des Endgerätapparates ist, auf der Grundlage der in der Zusatzinformation enthaltenen Dopplerfrequenzinformation (156a, 272a) und der durch den Endgerätapparat (50, 50A) erzeugten Frequenzdifferenzinformation;
eine Empfangseinheit für eine zur Ortung erforderliche Anzahl positionsbezogener Signale, die so viele positionsbezogene Signale empfängt, wie eine erforderliche Anzahl zur Ortungsberechnung durch den Ortungsapparat auf der Grundlage der Übertragungsfrequenzinformation (252), die die Übertragungsfrequenz der positionsbezogenen Signale von den jeweiligen Positionsinformationssatelliten angibt, der den jeweiligen Positionsinformationssatelliten (12a-d) entsprechenden Dopplerfrequenzinformation (156a, 272a), und der Driftfrequenzinformation (280) ;
eine Ortungsbasisinformations-Erzeugungseinheit, die eine Ortungsbasisinformation erzeugt, die durch den Ortungsapparat zur Ortungsberechnung zu verwenden ist, auf der Grundlage der empfangenen jeweiligen positionsbezogenen Signale; und
eine Ortungsbasisinformations-Übertragungseinheit, die die Ortungsbasisinformation an den Ortungsapparat überträgt.

2. Endgerätapparat (50, 50A), der eine Ortungspositionsinformation von einem Ortungsapparat (70) akquiriert, der eine Ortungsberechung auf der Grundlage positionsbezogener Signale von mehrfachen Positionsinformationssatelliten (12a-d) durchführt, wobei der Endgerätapparat (70) umfasst :
eine Zusatzinformations-Akquisitionseinheit, die eine Zusatzinformation, die eine Dopplerfrequenzinformation (152a, 272a) enthält, die eine Dopplerfrequenz angibt, die eine Änderung in einer Frequenz der positionsbezogenen Signale aufgrund einer Relativbewegung der jeweiligen Positionsinformationssatelliten (12a-d) und des Endgerätapparates (70) ist, von einem Zusatzinformations-Bereitstellungsapparat akquiriert, der fähig ist, mit dem Endgerätapparat zu kommunizieren;
eine Signalempfangseinheit (ST6), die die positionsbezogenen Signale von den Positionsinformationssatelliten (12a-d) auf der Grundlage der Zusatzinformation empfängt;
eine Empfangsfrequenzinformations-Erzeugungseinheit (ST7), die eine Empfangsfrequenzinformation erzeugt, die eine Empfangsfrequenz zu der Zeit angibt, wenn die positionsbezogenen Signale empfangen werden;
**dadurch gekennzeichnet, dass** der Endgerätapparat ferner umfasst:
eine Frequenzdifferenzinformations- (278) Erzeugungseinheit, die eine Frequenzdifferenzinformation erzeugt, die eine Frequenzdifferenz zwischen einer Übertragungsfrequenz, die eine Frequenz zu der Zeit ist, wenn die jeweiligen Positionsinformationssatelliten (12a-d) die positionsbezogenen Signale übertragen, und der Empfangsfrequenz angibt;
eine Driftfrequenzinformations- (280) Erzeugungseinheit (ST9), die eine Driftfrequenzinformation (280) erzeugt, die eine Driftfrequenz angibt, die eine Verschiebung der Empfangsfrequenz aufgrund eines Faktors innerhalb des Endgerätapparates (50, 50A) ist, auf der Grundlage der in der Zusatzinformation enthaltenen Dopplerfrequenzinformation (156a, 272a) und der durch den Endgerätapparat erzeugten Frequenzdifferenzinformation;
eine Empfangseinheit für eine zur Ortung erforderliche Anzahl positionsbezogener Signale (ST11), die so viele positionsbezogene Signale empfängt, wie eine erforderliche Anzahl zur Ortungsberechnung durch den Ortungsapparat auf der Grundlage der Übertragungsfrequenzinformation, die die Übertragungsfrequenz der positionsbezogenen Signale von den jeweiligen Positionsinformationssatelliten (12a-d) angibt, der den jeweiligen Positionsinformationssatelliten (12a-d) entsprechenden Dopplerfrequenzinformation (156a, 272a), und der Driftfrequenzinformation (280);
eine Ortungsbasisinformations- (282) Erzeugungseinheit (ST12), die eine Ortungsbasisinformation (282) erzeugt, die durch den Ortungsapparat zur Ortungsberechnung zu verwenden ist, auf der Grundlage der empfangenen jeweiligen positionsbezogenen Signale; und
eine Ortungsbasisinformations-Übertragungseinheit (ST13), die die Ortungsbasisinformation an den Ortungsapparat überträgt.

3. Endgerätapparat (50, 50A) gemäß Anspruch 2, wobei die Driftfrequenzinformations-Erzeugungseinheit (ST9) die Driftfrequenzinformation auf der Grundlage wenigstens einer Menge der Dopplerfrequenzinformation (156a, 272a) und der Frequenzdifferenzinformation erzeugt.

4. Endgerätapparat (50, 50A) gemäß Anspruch 2 oder 3, ferner umfassend:
eine Erzeugungseinheit für eine vorläufige Ortungspositionsinformation, die eine vorläufige Ortungsberechnung durchführt, auf der Grundlage der durch die Signalempfangseinheit empfangenen mehrfachen positionsbezogenen Signale, um eine vorläufige Ortungspositionsinformation zu erzeugen, die eine vorläufige Ortungsinformation angibt; und
eine Auswähleinheit für eine vorläufige Ortungspositionsinformation mit minimalem Fehler, die eine vorläufige Ortungspositionsinformation mit minimalem Fehler auswählt, die die vorläufige Ortungspositionsinformation mit einem minimalen Ortungsfehler von mehrfachen Stücken der durch die Erzeugungseinheit für eine vorläufige Ortungspositionsinformation erzeugten vorläufigen Ortungspositionsinformation ist,
wobei die Empfangsfrequenzinformations- (276) Erzeugungseinheit die Empfangsfrequenzinformation (276) erzeugt, die eine Frequenz angibt, bei der die positionsbezogenen Signale, die der vorläufigen Ortungspositionsinformation mit minimalem Fehler entsprechen, empfangen werden.

5. Endgerätapparat (50, 50A) gemäß Anspruch 2, ferner eine Driftinformations-Speicherungseinheit umfassend, die die Driftfrequenzinformation speichert,
wobei die Signalempfangseinheit die Driftfrequenzinformation verwendet, um die positionsbezogene Information zum Akquirieren der Ortungspositionsinformation von dem Ortungsapparat nächstes Mal zu empfangen.

6. Endgerätapparat (50, 50A) gemäß Anspruch 2, ferner umfassend:
eine Driftfrequenzübergangsinformations-Speicherungseinheit (ST10), die eine Driftfrequenzübergangsinformation speichert, die einen Übergang der Driftfrequenz aufgrund einer Temperaturänderung angibt;
eine Erzeugungseinheit für eine Temperaturinformation zu einer Driftinformationserzeugungszeit, die eine Temperaturinformation zu einer Zeit einer Driftinformationserzeugung erzeugt, die eine Temperatur zu der Zeit angibt, wenn die Driftfrequenzinformation erzeugt wird; und
eine Driftfrequenzübergangsinformations-Korrektureinheit, die die Driftfrequenzübergangsinformation auf der Grundlage der Driftfrequenzinformation und der Temperaturänderung zu der Zeit der Driftinformationserzeugung korrigiert.

7. Steuerprogramm für einen Endgerätapparat (50, 50A),
wobei das Steuerprogramm einen Computer veranlasst zum Ausführen von:
einem Zusatzinformations-Akquisitionsschritt, in dem ein Endgerätapparat (50, 50A), der eine Ortungspositionsinformation von einem Ortungsapparat (70) akquiriert, der eine Ortungsberechung auf der Grundlage positionsbezogener Signale von mehrfachen Positionsinformationssatelliten (12a-d) durchführt, eine Zusatzinformation, die eine Dopplerfrequenzinformation (156a, 272a) enthält, die eine Dopplerfrequenz angibt, die eine Änderung in einer Frequenz der positionsbezogenen Signale aufgrund einer Relativbewegung der jeweiligen Positionsinformationssatelliten (12a-d) und des Endgerätapparates (50, 50A) ist, von einem Zusatzinformations-Bereitstellungsapparat akquiriert, der fähig ist, mit dem Endgerätapparat (50, 50A) zu kommunizieren;
einem Signalempfangsschritt, in dem der Endgerätapparat die positionsbezogenen Signale von den Positionsinformationssatelliten (12a-d) auf der Grundlage der Zusatzinformation empfängt;
einem Empfangsfrequenzinformations- (276) Erzeugungsschritt, in dem der Endgerätapparat eine Empfangsfrequenzinformation (276) erzeugt, die eine Empfangsfrequenz zu der Zeit angibt, wenn die positionsbezogenen Signale empfangen werden;
einem Frequenzdifferenzinformations- (278) Erzeugungsschritt, in dem der Endgerätapparat eine Frequenzdifferenzinformation (278) erzeugt, die eine Frequenzdifferenz zwischen der Übertragungsfrequenz und der Empfangsfrequenz angibt;
einem Driftfrequenzinformations- (280) Erzeugungsschritt, in dem der Endgerätapparat (50, 50A) eine Driftfrequenzinformation (280) erzeugt, die eine Driftfrequenz angibt, die eine Verschiebung der Empfangsfrequenz aufgrund eines Faktors innerhalb des Endgerätapparates ist, auf der Grundlage der in der Zusatzinformation enthaltenen Dopplerfrequenzinformation (156a, 272a) und der durch den Endgerätapparat (50, 50A) erzeugten Frequenzdifferenzinformation;
einem Empfangsschritt für eine zur Ortung erforderliche Anzahl positionsbezogener Signale, in dem der Endgerätapparat so viele positionsbezogene Signale empfängt, wie eine erforderliche Anzahl zur Ortungsberechnung durch den Ortungsapparat auf der Grundlage der Übertragungsfrequenzinformation (252), die die Übertragungsfrequenz der positionsbezogenen Signale von den jeweiligen Positionsinformationssatelliten (12a-d) angibt, der den jeweiligen Positionsinformationssatelliten (12a-d) entsprechenden Dopplerfrequenzinformation (156a, 272a), und der Driftfrequenzinformation;
einem Ortungsbasisinformations-Erzeugungsschritt, in dem der Endgerätapparat (50, 50A) eine Ortungsbasisinformation erzeugt, die durch den Ortungsapparat zur Ortungsberechnung zu verwenden ist, auf der Grundlage der empfangenen jeweiligen positionsbezogenen Signale; und
einem Ortungsbasisinformations-Übertragungsschritt, in dem der Endgerätapparat (50, 50A) die Ortungsbasisinformation an den Ortungsapparat überträgt.

8. Computeraufzeichnungsmedium mit einem darin aufgezeichneten Steuerprogramm gemäß Anspruch 7.

## Revendications

1. Système de positionnement, comprenant :
un dispositif terminal (50, 50A) qui acquiert une information de positionnement depuis un appareil de positionnement (70) qui effectue des calculs de positionnement basés sur des signaux de position provenant de plusieurs satellites d'information de position (12a à d) ; et
un appareil de fourniture d'information supplémentaire qui est capable de communiquer avec le dispositif terminal (50, 50A) et fournit au dispositif terminal (50, 50A) une information supplémentaire pour recevoir les signaux de position, dans
lequel
l'information supplémentaire comprend une information d'effet Doppler (156a, 272a) indiquant un effet Doppler qui est un changement d'une fréquence des signaux de position dû au déplacement relatif des satellites d'information de position respectifs et du dispositif terminal,
le dispositif terminal (50, 50A) comprend :
une unité d'acquisition d'information supplémentaire qui acquiert l'information supplémentaire depuis l'appareil de fourniture d'information supplémentaire ;
une unité de réception de signal qui reçoit les signaux de position depuis les satellites d'information de position (12a à d) sur la base de l'information supplémentaire ;
une unité de génération d'information de fréquence de réception (276) qui génère une information de fréquence de réception (276) indiquant une fréquence de réception au moment où les signaux de position sont reçus ;
**caractérisé en ce que** le dispositif terminal comprend en outre :
une unité de génération d'information de différence de fréquence (278) qui génère une information de différence de fréquence (278) indiquant une différence de fréquence entre une fréquence d'émission, qui est une fréquence au moment où les satellites d'information de position respectifs (12a à d) transmettent les signaux de position, et la fréquence de réception ;
une unité de génération d'information de dérive de fréquence (280) qui génère une information de dérive de fréquence (280) indiquant une dérive de fréquence, qui est un décalage de la fréquence de réception dû à un facteur à l'intérieur du dispositif terminal, sur la base de l'information d'effet Doppler (156a, 272a) comprise dans l'information supplémentaire et de l'information de différence de fréquence générée par le dispositif terminal (50, 50A) ;
une unité de réception de positionnement demandant un nombre de signaux de position qui reçoit autant de signaux de position que le nombre requis pour le calcul du positionnement par l'appareil de positionnement sur la base de l'information de fréquence d'émission (252) indiquant la fréquence d'émission des signaux de position provenant des satellites d'information de position respectifs, de l'information d'effet Doppler (156a, 272a) correspondant aux satellites d'information de position respectifs (12a à d), et de l'information de dérive de fréquence (280) ;
une unité de génération d'information de base de positionnement qui génère une information de base de positionnement à utiliser par l'appareil de positionnement pour le calcul du positionnement sur la base des signaux de position respectifs reçus ; et
une unité de transmission d'information de base de positionnement qui transmet l'information de base de positionnement à l'appareil de positionnement.

2. Dispositif terminal (50, 50A) qui acquiert une information de positionnement depuis un appareil de positionnement (70) qui effectue un calcul de positionnement basé sur des signaux de position provenant de plusieurs satellites d'information de position (12a à d), le dispositif terminal (70) comprenant :
une unité d'acquisition d'information supplémentaire qui acquiert l'information supplémentaire qui comprend une information d'effet Doppler (1 56a, 272a) indiquant un effet Doppler qui est un changement d'une fréquence des signaux de position dû au déplacement relatif des satellites d'information de position respectifs (12a à d) et
du dispositif terminal (70), depuis un appareil de fourniture d'information supplémentaire capable de communiquer avec le dispositif terminal ;
une unité de réception de signal (ST6) qui reçoit les signaux de position depuis les satellites d'information de position (12a à d) sur la base de l'information supplémentaire ;
une unité de génération d'information de fréquence de réception (ST7) qui génère une information de fréquence de réception indiquant une fréquence de réception au moment où les signaux de position sont reçus ;
**caractérisé en ce que** le dispositif terminal comprend en outre :
une unité de génération d'information de différence de fréquence (278) qui génère une information de différence de fréquence indiquant une différence de fréquence entre une fréquence d'émission, qui est une fréquence au moment où les stellites d'information de position respectifs (12a à d) transmettent les signaux de position, et
la fréquence de réception ;
une unité (ST9) de génération d'information de dérive de fréquence (280) qui génère une information de dérive de fréquence indiquant une dérive de fréquence (280), qui est un décalage de la fréquence de réception dû à un facteur à l'intérieur du dispositif terminal (50, 50A), sur la base de l'information d'effet Doppler (156a, 272a) comprise dans l'information supplémentaire et de l'information de différence de fréquence générée par le dispositif terminal ;
une unité de réception de positionnement demandant un nombre de signaux de position (ST11) qui reçoit autant de signaux de position que le nombre requis pour le calcul du positionnement par l'appareil de positionnement sur la base de l'information de fréquence d'émission indiquant la fréquence d'émission des signaux de position provenant des satellites d'information de position respectifs (12a à d), de l'information effet Doppler (156a, 272a) correspondant aux satellites d'information de position respectifs (12a à d), et de l'information de dérive de fréquence (280) ;
une unité (ST12) de génération d'information de base de positionnement (282) qui génère une information de base de positionnement (282) à utiliser par l'appareil de positionnement pour le calcul du positionnement sur la base des signaux de position respectifs reçus ; et
une unité de transmission d'information de base de positionnement (ST13) qui transmet l'information de base de positionnement à l'appareil de positionnement.

3. Dispositif terminal (50, 50A) selon la revendication 2, dans lequel l'unité de génération d'information de dérive de fréquence (ST9) génère l'information de dérive de fréquence sur la base d'au moins un ensemble de l'information d'effet Doppler (156a, 272a) et de l'information de différence de fréquence.

4. Dispositif terminal (50, 50A) selon la revendication 2 ou 3, comprenant en outre :
une unité de génération d'information de positionnement préliminaire qui effectue un calcul d'information de positionnement préliminaire sur la base des plusieurs signaux de position reçus par l'unité de réception de signal pour générer une information de positionnement préliminaire indiquant un positionnement préliminaire ; et
une unité de sélection d'information de positionnement préliminaire avec erreur minimum qui sélectionne une information de positionnement préliminaire avec erreur minimum qui est l'information de positionnement préliminaire avec une erreur de positionnement minimum provenant de plusieurs parties de l'information de positionnement préliminaire générée par l'unité de génération d'information de positionnement préliminaire, dans lequel
l'unité de génération d'information de fréquence de réception (276) génère l'information de fréquence de réception (276) indiquant une fréquence à laquelle les signaux de position correspondant à l'information de positionnement préliminaire avec erreur minimum sont reçus.

5. Dispositif terminal (50, 50A) selon la revendication 2, comprenant en outre une unité de stockage d'information de dérive qui stocke l'information de dérive de fréquence, dans lequel
l'unité de réception de signal utilise l'information de dérive de fréquence afin de recevoir l'information de position pour acquérir l'information de positionnement depuis l'appareil de positionnement la fois suivante.

6. Dispositif terminal (50, 50A) selon la revendication 2, comprenant en outre :
une unité de stockage d'information de transition de dérive de fréquence (ST10) qui stocke l'information de transition de dérive de fréquence indiquant une transition de la dérive de fréquence due au changement de température ;
une unité de génération d'information de température au moment de la génération de l'information de dérive qui génère une information de température au moment de la génération de l'information de dérive indiquant la température au moment où l'information de dérive de fréquence est générée ; et
une unité de correction d'information de transition de dérive de fréquence qui corrige l'information de transition de dérive de fréquence sur la base de l'information de dérive de fréquence et de l'information de température au moment de la génération de l'information de dérive.

7. Programme de commande pour un dispositif terminal (50, 50A), le programme de commande amenant un ordinateur à exécuter :
une étape d'acquisition d'information supplémentaire dans laquelle un dispositif terminal (50, 50A), qui acquiert une information de positionnement depuis un appareil de positionnement (70) qui effectue un calcul de positionnement sur la base de signaux de position provenant de plusieurs satellites d'information de position (12a à d), acquiert une information supplémentaire, qui comprend une information d'effet Doppler (156a, 272a) indiquant un effet Doppler qui est un changement d'une fréquence des signaux de position dû au déplacement relatif des satellites d'information de position respectifs (12a à d) et du dispositif terminal (50, 50A), depuis un appareil de fourniture d'information supplémentaire qui est capable de communiquer avec le dispositif terminal (50, 50A) ;
une étape de réception de signal dans laquelle le dispositif terminal reçoit les signaux de position depuis les satellites d'information de position (12a à d) sur la base de l'information supplémentaire ;
une étape de génération d'information de fréquence de réception (276) dans laquelle le dispositif terminal génère une information de fréquence de réception (276) indiquant une fréquence de réception au moment où les signaux de position sont reçus ;
une étape de génération d'information de différence de fréquence (278) dans laquelle le dispositif terminal génère une information de différence de fréquence (278) indiquant une différence de fréquence entre la fréquence d'émission et la fréquence de réception ;
une étape de génération d'information de dérive de fréquence (280) dans laquelle le dispositif terminal (50, 50A) génère une information de dérive de fréquence (280) indiquant une dérive de fréquence, qui est un décalage de la fréquence de réception dû à un facteur à l'intérieur du dispositif terminal, sur la base de l'information d'effet Doppler (156a, 272a) comprise dans l'information supplémentaire et de l'information de différence de fréquence générée par le dispositif terminal (50, 50A) ;
une étape de réception de positionnement demandant un nombre de signaux de position dans laquelle le dispositif terminal reçoit autant de signaux de position que le nombre requis pour le calcul du positionnement par l'appareil de positionnement sur la base de l'information de fréquence d'émission (252) indiquant la fréquence d'émission des signaux de position provenant des satellites d'information de position respectifs (12a à d), de l'information d'effet Doppler (156a, 272a) correspondant aux satellites d'information de position respectifs (12a à d), et de l'information de dérive de fréquence ;
une étape de génération d'information de base de positionnement dans laquelle le dispositif terminal (50, 50A) génère une information de base de positionnement à utiliser par l'appareil de positionnement pour le calcul du positionnement sur la base des signaux de position respectifs reçus ; et
une étape de transmission d'information de base de positionnement dans laquelle le dispositif terminal (50, 50A) transmet l'information de base de positionnement à l'appareil de positionnement.

8. Support d'enregistrement d'ordinateur comportant, enregistré sur lui, un programme de commande selon 1a revendication 7.
